Europäisches Patentamt

**European Patent Office**

Office européen des brevets

(19)

(11) Numéro de publication: **0 015 209**
**B1**

(12) **FASCICULE DE BREVET EUROPEEN**

(45) Date de publication du fascicule du brevet: **23.03.83**

(51) Int. Cl.³: **B 32 B 31/00, C 03 C 27/12**

(21) Numéro de dépôt: **80400244.2**

(22) Date de dépôt: **20.02.80**

(54) **Dispositif pour l'assemblage de feuilles de verre et/ou de matières plastiques.**

(30) Priorité: **21.02.79 FR 7904337**

(43) Date de publication de la demande:
**03.09.80 Bulletin 80/18**

(45) Mention de la délivrance du brevet:
**23.03.83 Bulletin 83/12**

(84) Etats contractants désignés:
**AT BE CH DE FR GB IT LU NL SE**

(56) Documents cités:
**FR - A - 1 197 090**
**FR - A - 2 053 104**
**US - A - 2 163 648**
**US - A - 2 685 548**
**US - A - 2 983 635**
**US - A - 3 054 344**

(73) Titulaire: **SAINT-GOBAIN VITRAGE**
**63, rue de Villiers**
**F-92209 Neuilly Sur Seine (FR)**

(72) Inventeur: **Colmon, Daniel**
**10, avenue du Moulin**
**F-60150 Thourotte (FR)**
Inventeur: **Triffaux, Francis**
**14, rue de Vogue**
**F-60150 Thourotte (FR)**

(74) Mandataire: **Eudes, Marcel et al,**
**Saint-Gobain Recherche 39 Quai Lucien Lefranc**
**F-93304 Aubervilliers Cedex (FR)**

Courier Press, Leamington Spa, England.

## Dispositif pour l'assemblage
## de feuilles de berre et/ou de matières plastiques

La présente invention est relative à l'assemblage de feuilles de verre et/ou de matières plastiques pour former un vitrage feuilleté. Plus particulièrement l'invention concerne l'assemblage des éléments susdits par calandrage, c'est-à-dire par passage de ces éléments entre des rouleaux de pinçage.

Encore plus particulièrement, l'invention est relative à un dispositif pour assembler un support plan ou à courbure simple ou double, monolithe ou feuilleté, en verre ou en matière plastique, avec une feuille ou un film de matière plastique, pour former un vitrage de sécurité.

Bien que l'invention s'applique à la fabrication de vitrages feuilletés très divers, elle sera plus particulièrement décrite par la suite en relation avec la fabrication d'un vitrage feuilleté de sécurité comprenant un support rigide monolithe ou feuilleté recouvert d'une feuille de matière plastique souple conférant les propriétés de sécurité désirées. Un tel vitrage est décrit par exemple dans les publications de brevets français 2.187.719, 2.251.608, dans la publication du brevet belge 856.398.

L'assemblage de ces vitrages feuilletés s'effectue généralement par un pressage préliminaire des éléments, par calandrage, suivi le cas échéant d'un cycle d'autoclave ayant pour effet d'améliorer l'adhésion entre les éléments du feuilleté.

Lorsque le vitrage feuilleté est plan, ou lorsqu'il présente une simple courbure, le calandrage peut se faire par passage des éléments à assembler entre deux rouleaux cylindriques recouverts d'une matière élastique appropriée ou encore entre deux rouleaux gonflables, en caoutchouc. Cette opération ne pose généralement pas de problème car il est aisé dans ces deux cas d'appliquer une pression uniforme sur la totalité de la surface des éléments assemblés du vitrage.

Par contre, lorsque le vitrage feuilleté présente un double bombage, il devient très difficile d'obtenir un assemblage homogène des éléments sur toute leur surface.

On connait un dispositif à rouleaux presseurs dans lequel ceux-ci sont dotés, sur une longueur correspondant au moins à la largeur des feuilles à presser, d'une enveloppe en un matériau élastique tel du caoutchouc, l'espace interne de cette enveloppe élastique étant rempli d'un fluide sous pression. Dans un tel dispositif, le rouleau agissant sur la face concave du vitrage prend en position de travail une forme en cigare épousant la courbure transversale du vitrage. De ce fait, la vitesse linéaire à la périphérie de l'enveloppe est différente d'un point à un autre. Il peut alors se former des plis sur la feuille ou le film de matière plastique appliqué par ce rouleau sur le support.

On connait encore un dispositif dans lequel les rouleaux sont remplacés par deux séries superposées de galets disposés les uns à côté des autres, leur position pouvant être réglée indépendamment les uns des autres, de façon à obtenir la courbure transversale désirée. Alors que ce dispositif s'applique parfaitement bien à la fabrication d'un vitrage feuilleté dont les deux faces extérieures sont formées d'éléments rigides, par exemple deux feuilles de verre, il n'en est pas de même lorsqu'il s'agit d'assembler une feuille souple avec un support rigide, auquel cas ce dispositif procure une adhésion non homogène. On observe alors de nombreuses bulles d'air dans les rainures correspondant aux espaces entre deux galets voisins s'appliquant sur la feuille souple.

L'invention propose un dispositif qui obvie aux inconvénients cités, et s'applique parfaitement bien à l'assemblage préliminaire ou définitif des vitrages mentionnés ci-dessus, comprenant un support rigide monolithe ou feuilleté, en verre ou en matière plastique, revêtu d'une feuille ou film de matière plastique souple.

Le dispositif de l'invention permet d'obtenir un vitrage dont les éléments adhèrent les uns aux autres de façon homogène sur toute leur surface. En outre, l'adhésion procurée peut être suffisante pour les applications ultérieures du vitrage sand qu'il soit nécessaire de recouvrir à un cycle d'autoclave. Ce dispositif procure enfin un vitrage de très bonne qualité optique, exempt de bulles.

Conformément à l'invention, le dispositif pour la fabrication de vitrages feuilletés notamment de vitrages d'automobile ou de bâtiment comprend en combinaison:

— des moyens inférieurs de support du vitrage à assembler disposés sensiblement suivant le profil de la face inférieure du vitrage à assembler transversalement à sa direction de déplacement,

— des moyens de pressage du vitrage à assembler sur les moyens inférieurs de support, moyens constitués d'un rouleau presseur cylindrique souple disposé au-dessus des moyens inférieurs de support, et qui s'étend, transversalement à la direction de déplacement du vitrage à assembler, sur une longueur au moins égale à la longueur dudit vitrage,

— des moyens supérieurs appuyant sur le rouleau presseur pour le cintrer en lui donnant toute courbure désirée correspondant sensiblement au profil de la face supérieure du vitrage à assembler transversalement à sa direction de déplacement et qui maintiennent le rouleau presseur dans sa position de travail au contact de la face supérieure dudit vitrage,

— des moyens assurant l'entraînement en rotation du rouleau presseur et/ou d'au moins une partie des moyens inférieurs de support.

Utilisé pour la fabrication d'un vitrage feuilleté automobile ou de bâtiment par exemple, pour lesquels les deux faces extérieures sont sensiblement parallèles, le dispositif présente des moyens inférieurs de support et un rouleau presseur de courbures sensiblement identiques, lesdites courbures étant proches de la courbure moyenne du vitrage à assembler transversalement à sa direction de déplacement.

Les moyens inférieurs de support épousant approximativement une courbure du support sont avantageusement une succession de galets, munis chacun d'un système réglant sa position dans le dispositif. Ce dernier s'adapte ainsi aux courbures les plus diverses et peut assurer la fabrication d'un grand nombre de types de vitrages feuilletés. Avantageusement, tous les galets ont le même diamètre et ils présentent en outre une couche élastique à leur périphérie.

Dans une réalisation de l'invention, ces galets inférieurs sont de deux sortes: des galets moteurs entraînant le vitrage au moment de l'assemblage et des galets fous entraînés par le mouvement du vitrage.

Etant données la courbure longitudinale du vitrage, son épaisseur et sa disposition dans le dispositif, la longueur d'une génératrice du vitrage sur sa face inférieure est supérieure à celle d'une génératrice sur sa face supérieure. Pour éviter tout risque de dévirage du vitrage par rotation et/ou translation perpendiculaire à son mouvement d'avance, avantageusement, le rouleau presseur est moteur et les galets inférieurs moteurs sont montés sur roues libres, ce qui leur permet le cas échéant de tourner à une vitesse plus importante que celle qui leur est procurée par leur dispositif moteur.

Le rouleau presseur cylindrique souple, poussé et courbé par les moyens supérieurs, vient s'appliquer contre l'élément supérieur à assembler, par exemple une feuille de matière plastique souple et molle pour la presser contre la partie rigide. Ce rouleau doit être suffisamment souple pour prendre la courbure du vitrage, cette courbure pouvant être régulière ou, comme dans la plupart des cas, présenter des cassures de courbure, et, en même temps, sa surface extérieure doit être, de préférence, assez dure pour être résistante à l'usage.

Le rouleau presseur est suffisamment long pour éviter tout effet de bords. Son diamètre est suffisamment faible, généralement inférieur à 15—20 cm; de préférence, il est de l'ordre de 10 cm et moins de façon qu'il agisse sur une zone étroite du vitrage.

Le rouleau presseur peut être en caoutchouc vulcanisé. Avantageusement, il est formé d'au moins deux couches de caoutchouc de duretés différentes: une couche externe dure et une couche interne plus molle. De cette façon, on augmente encore la souplesse du système lors des changements de courbure du vitrage.

Le rouleau presseur peut encore être réalisé à partir d'autres matières synthétiques de souplesse suffisante, par exemple en polyuréthane, en polyéthylène, etc...

Le rouleau presseur peut encore comprendre une couche interne dure jouant le rôle d'une armature empêchant un cintrage trop important du rouleau au cas où celui-ci est relevé comme il sera dit par la suite.

Dans une forme préférée, le rouleau presseur est formé de trois couches: une couche externe dure en caoutchouc vulcanisé ayant une bonne résistance à l'abrasion et à l'usure, une couche intermédiaire molle en caoutchouc vulcanisé lui procurant une grande souplesse, une couche interne dure constituant l'âme du rouleau, en caoutchouc vulcanisé, et qui lui procure une certaine rigidité en lui évitant un cintrage trop important sous l'effet de son propre poids lorsqu'il est relevé par ses extrémités.

Pour le pressage de vitrages feuilletés à courbure transversale régulière cylindrique, le rouleau presseur peut éventuellement présenter une âme métallique de diamètre suffisamment faible, par exemple de l'ordre de 15 à 10 millimètres.

Par contre, lorsque le vitrage feuilleté présente une courbure transversale irrégulière avec des cassures de courbure, ou rouleau presseur à âme métallique pouvant difficilement épouser cette courbure irrégulière, on utilise de préférence un rouleau entièrement en caoutchouc ou formé à partir d'autres matières souples.

De préférence le rouleau presseur est relié à un système moteur qui l'entraine en rotation et qui peut être le même que celui entrainant les galets inférieurs moteurs.

Les moyens supérieurs s'appuyant sur le rouleau cylindrique pour lui donner la courbure désirée sont avantageusement formés d'une succession de galets déformateurs, chacun d'eux étant muni d'un système de réglage indépendant en hauteur.

Dans une réalisation du dispositif, une partie de ces galets vient s'appuyer sur la périphérie supérieure amont du rouleau presseur, une autre partie vient s'appuyer sur sa périphérie supérieure aval. On assure ainsi le maintien du rouleau presseur dans sa position de travail, en l'empêchant de trop se déplacer sous la réaction du vitrage lors de l'assemblage.

Suivant une autre réalisation avantageuse de l'invention, le maintien du rouleau cylindrique souple, courbé dans sa position de travail, s'effectue par des moyens indépendants des galets déformateurs, moyens qui viennent s'appuyer sur sa périphérie supérieure aval, alors que les galets assurant la courbure sont légèrement décalés vers l'amont au-dessus du rouleau. Les moyens qui viennent s'appuyer en aval sur le rouleau presseur et qui l'empêchent de se déplacer dans cette direction peuvent être formés de deux ou d'une succession de galets ou encore d'un rouleau d'appui réglables en hauteur et en position par rapport au rouleau courbe presseur.

Avantageusement les galets supérieurs peuvent chacun être montés sur un système à débattement et à rappel élastique tel un ressort ou un vérin. De cette façon, la courbure du rouleau peut évoluer plus facilement au cours de l'assemblage, pour s'adapter à chaque moment à la courbure transversale exacte du vitrage.

Lors de la fabrication de vitrages feuilletés à support rigide en verre, monolithe ou feuilleté, pour éviter le bris, il est important que ce support soit correctement maintenu durant toute l'opération d'assemblage par les galets inférieurs, notamment ceux agissant sur les bords. C'est pourquoi ces galets inférieurs peuvent comprendre une courche élastique et/ou ils peuvent être montés comme les galets supérieurs sur un système à débattement et rappel élastique tel un ressort ou un vérin.

On peut actionner les vérins au cours de la réalisation du pressage de façon à suivre les modifications de courbure transversale du vitrage. L'action des vérins hydrauliques ou hydropneumatiques peut être programmée au préalable.

La position des galets supérieurs et/ou inférieurs peut encore être modifiée au cours du pressage en utilisant des moyens mécaniques tels une came.

L'ensemble des moyens presseurs du dispositif peut être mobile autour d'un axe horizontal de façon que, lorsque le bord de la partie rigide du vitrage atteint ces moyens presseurs, le vitrage se trouve sensiblement perpendiculaire au plan passant par les axes géométriques du rouleau presseur et des galets inférieurs.

Le dispositif peut être utilisé pour assembler des éléments rigides ou souples disposés au préalable les uns au-dessus des autres. Il peut également être utilisé pour assembler un support rigide monolithe ou feuilleté avec une feuille souple non superposés au préalable.

D'autres caractéristiques et avantages du dispositif apparaîtront dans la description suivante d'un exemple de réalisation, faite en référence aux figures.

— La Figure 1 est une vue de face en élévation de l'ensemble du dispositif pour la fabrication des vitrages feuilletés,

— la Figure 2 est une vue en élévation latérale de ce dispositif,

— la Figure 3 est une vue de détail en section partielle du montage du rouleau presseur,

— la Figure 4 est une section de détail des organes agissant du dispositif et de leur disposition les uns par rapport aux autres,

— les Figures 5, 6 et 7 sont des vues schématiques du principe d'assemblage.

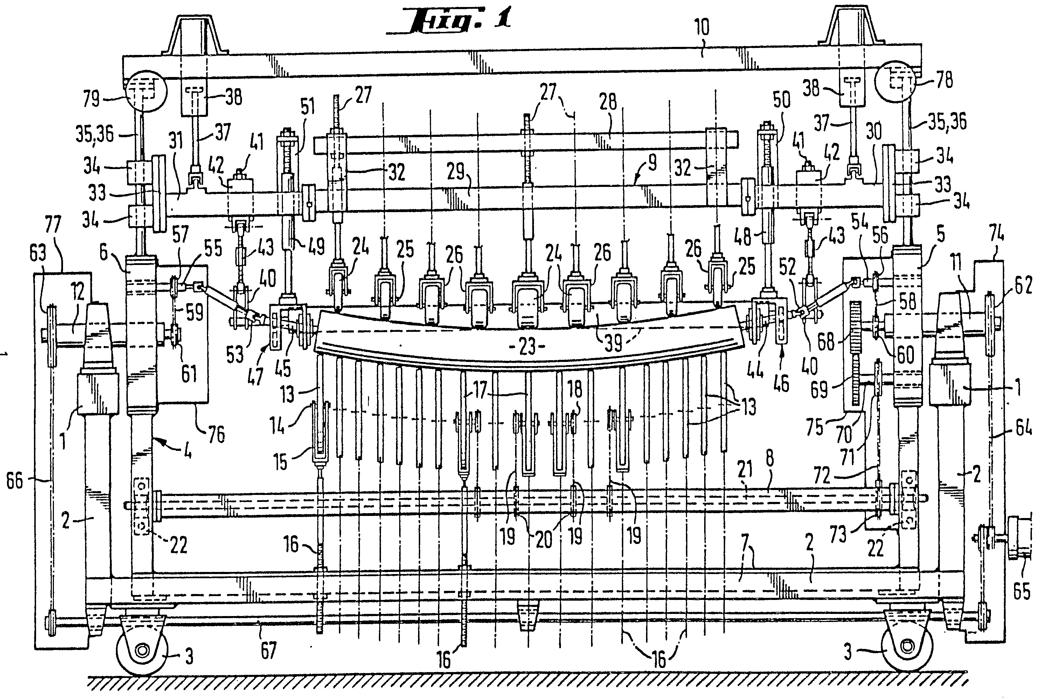

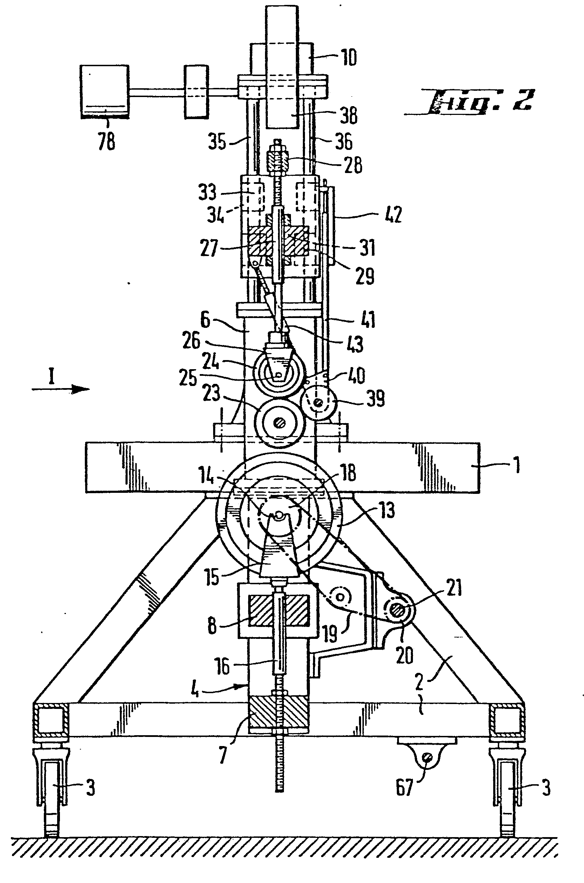

Représenté sur les Figures 1 et 2, le dispositif comprend un bâti support 1, formé de différents profilés assemblés ensemble par soudure, et dont la base 2, plus large de manière à procurer une bonne assise à l'ensemble, repose sur des roulettes 3 qui permettent le cas échéant, un déplacement aisé du dispositif.

Un cadre mobile 4 formé de deux montants verticaux 5 et 6 et de quatre poutres horizontales 7, 8, 9 et 10, monté pivotant autour de deux demi-axes 11, 12 portés par le bâti, porte lui-même les différents organes intervenant dans l'assemblage. Les galets inférieurs 13 sont montés sur des axes 14 soutenus par des fourches 15 prolongeant des tiges filetées 16, qui, vissées sur la poutre inférieure 7 et la poutre 8, règlent la hauteur des galets et leur disposition les uns par rapport aux autres de façon que leurs génératrices supérieures forment la courbure transversale moyenne du vitrage à fabriquer. Le dispositif comprend une vingtaine de galets inférieurs, d'un diamètre de l'ordre de 25 centimètres environ. Plusieurs de ces galets 17 sont solidaires de pignons 18 raccordés par une chaine 19 à des roues dentées 20 d'un arbre tournant 21 horizontal décalé vers l'arrière du dispositif par rapport à la poutre horizontale 8. L'arbre tournant est lui-même monté sur des paliers 22 fixés au cadre mobile. Les autres galets inférieurs sont montés fous sur leur axe 14.

Le corps métallique de chaque galet est recouvert à sa périphérie d'au moins une couche d'un matériau souple et résistant, par exemple un caoutchouc vulcanisé.

Au-dessus de la génératrice supérieure des galets est monté un rouleau presseur cylindrique 23, d'un diamètre de l'ordre de 10 centimètres environ, en caoutchouc vulcanisé, constitué d'une couche externe de dureté Shore de 70 et d'une couche interne de dureté Shore de 40 formant le corps du rouleau, courbé sous l'action d'une série de galets supérieurs 24. Ces galets supérieurs sont montés fous sur des axes 25 maintenus dans des fourches 26 prolongeant des tiges filetées 27 vissées sur une traverse supérieure horizontale 28 et sur la partie centrale 29 de la poutre 9 formée de trois parties. Cette partie centrale 29 est parallèle à la traverse supérieure horizontale 28 et légèrement décalée, d'environ 15 millimètres vers l'amont, par rapport aux deux parties extrêmes 30 et 31 de le poutre 9, donc par rapport au plan du cadre pivotant.

Les tiges filetées 27, verticales, règlent la hauteur des galets supérieurs 24 et leur action sur le rouleau presseur 23, plus précisément sur sa partie supérieure amont, étant donné le décalage.

Les galets supérieurs 24, au nombre d'une dizaine environ, d'un diamètre de l'ordre de 10 centimètres, sont en acier et recouverts à leur périphérie d'au moins une couche de matériau souple et résistant tel un caoutchouc.

Dans cet exemple de réalisation, les galets sont verticaux et leur largeur est différente selon leur situation au-dessus du rouleau, plus importante pour les galets du centre que pour ceux des extrémités. Ceci est justifié par le fait que la partie agissante des galets est, étant donné la courbure du rouleau, plus faible sur les bords du rouleau qu'en son centre. De ce fait, la distance entre les galets supérieurs varie suivant leur emplacement. De préférence, ces galets supérieurs ont des bords arrondis.

On peut également monter les galets plus ou moins inclinés par rapport au plan de symétrie du dispositif, en fonction de leur situation et de la courbure à donner au rouleau, de façon que leur action sur celui-ci soit perpendiculaire à son axe.

Le rouleau cylindrique presseur peut avoir une longueur de 1 mètre et plus selon les dimensions du vitrage à fabriquer. Pour éviter des effets de bords éventuels dus à ses moyens de support et d'entraînement, il dépasse les limites du vitrage d'au moins 10 centimètres de chaue côté.

Pour augmenter la souplesse des organes de pinçage du dispositif vis-à-vis du changement de courbure pour un même vitrage, on peut monter sur la tige des galets supérieurs et/ou sur celle des galets inférieurs un système à débattement et à rappel élastique non représenté. Des ressorts tarés par exemple peuvent être montés sur les tiges des galets entre la poutrelle 28 et la partie 29 de la poutre 9 ou encore entre les deux poutres 7 et 8.

La traverse supérieure horizontale 28 est montée par l'intermédiaire de plats 32 sur la partie centrale 29 de la poutre horizontale 9. Cette poutre 9 est fixée de chaque côté à un plat 33 portant quatre bagues 34 coulissant autour de deux tiges cylindriques 35 et 36 formant la partie supérieure de chacun des deux montants du cadre. Cette poutre 9 est liée aux tiges 37 de deux vérins verticaux 38 dont les corps sont fixés à la poutre horizontale supérieure 10 du cadre. Ces deux vérins permettent la levée de la partie supérieure de l'ensemble presseur, c'est-à-dire le rouleau presseur 23 proprement dit, les galets supérieurs 24 et un rouleau d'appui 39 décrit par la suite, et par là de créer un espace entre le rouleau presseur et les galets inférieurs.

De cette façon, on peut intervenir facilement et rapidement pour libérer le cas échéant un vitrage mal dirigé ou défectueux qui pourrait rester coincé entre le rouleau presseur et les galets inférieurs, tout en évitant de remonter les galets supérieurs et par là de dérégler la courbure du rouleau dans sa position de travail. Le relevage facilite également le réglage initial de la position des galets inférieurs.

Avantageusement, les vérins sont des vérins hydropneumatiques dont l'action est parfaitement contrôlée.

Le rouleau d'appui 39 est maintenu à chacune de ses extrémités par une articulation 40 liée d'une part à une tige de maintien 41, sensiblement verticale, fixée par vis à une équerre 42 rapportée sur la poutre 9. L'articulation 40 est liée d'autre part à une tige inclinée 43 formée de deux demi-tiges filetées à pas inverse, reliées par une bague filetée susceptible de les rapprocher ou les écarter, donc de jouer sur la longueur de la tige inclinée 43. Ce type de montage du rouleau d'appui permet de régler sa hauteur et sa position par rapport au rouleau presseur ainsi que sa pression contre lui. Le rouleau d'appui est appliqué contre la partie supérieure aval du rouleau presseur.

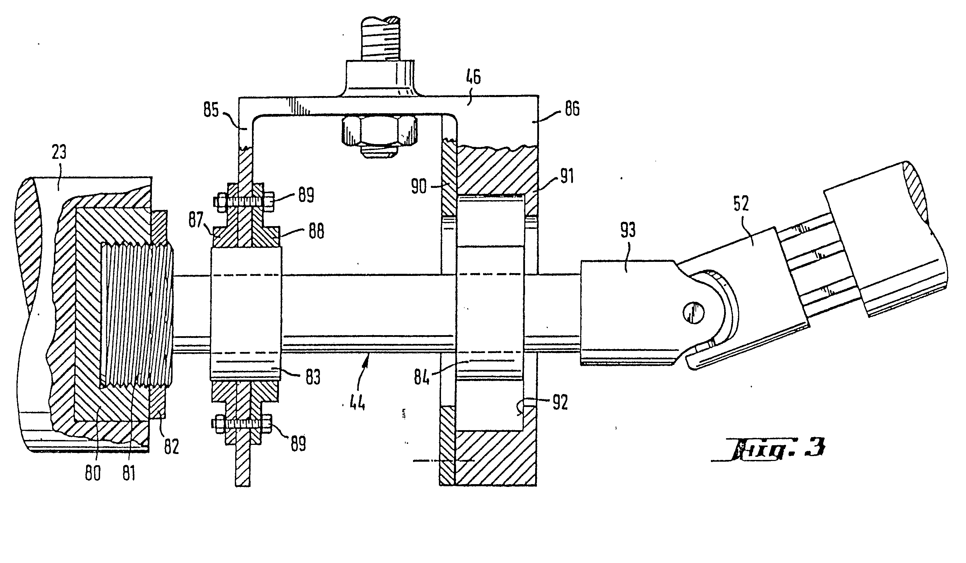

Le rouleau presseur est maintenu à chacune de ses deux extrémités par un demi-arbre tournant 44 et 45 monté sur un palier en forme de fourche 46 et 47 à double roulement à billes oscillant et coulissant. Chacune des fourches est maintenue et réglée en hauteur par une tige filetée 48 et 49 vissée à une équerre 50 et 51 rapportée également sur la poutre horizontale 9. Le montage sur double roulement à billes (ce montage sera décrit par la suite en référence à la figure 3), donne une grande liberté de mouvement au rouleau et n'entrave en aucune façon son action sur le vitrage.

Les deux demi-arbres 44 et 45 sont reliés par des joints homocinétiques 52 et 53 à deux demi-arbres horizontaux 54 et 55 montés sur les montants 5 et 6 du cadre mobile 4. Portées par les deux demi-arbres horizontaux 54 et 55, deux roues dentées 56 et 57 sont reliées par chaines 58 et 59 à deux autres roues dentées 60 et 61 solidaires des demi-axes du pivotement 11 et 12 du cadre mobile 4.

L'extrémité de ces demi-axes la plus extérieure au dispositif porte une autre roue dentée 62 et 63 reliée à un dispositif moteur 65, l'une par une chaîne 64 et l'autre par une chaîne 66 et un arbre 67.

L'autre extrémité du demi-axe 11 porte encore une première roue d'engrenage 68 liée à une deuxième roue d'engrenage 69 solidaire d'un demi-arbre 70 porté par la montant 5. Sur ce demi-arbre 70 est montée une roue dentée 71. Cette roue dentée est reliée par une chaîne 72 à une roue dentée 73 solidaire de l'arbre 21 entraînant les galets inférieurs moteurs.

Les roues dentées et chaînes du système de transmission sont protégées par des carters 74, 75, 76 et 77.

Le dispositif présente encore deux systèmes de contrepoids 78 et 79 qui facilitent le pivotement du cadre autour des demi-axes 11 et 12.

La figure 3 représente le montage du rouleau presseur 23 à une de ses extrémités sur le demi-arbre 44.

L'extrémité du rouleau 23 en caoutchouc, préalablement alésée, contient une bague filetée 80 dans laquelle vient se visser l'extrémité 81 du demi-arbre 44. Ce vissage est bloqué à l'aide d'un contre-écrou 82. Le demi-arbre 44 est monté dans deux roulements à billes sphériques 83 et 84 permettant un mouvement d'oscillation du demi-arbre par rapport aux deux dents 85 et 86 du palier 46 en forme de fourche, qui supportent les roulements à billes. Deux bagues 87 et 8 fixées par vis 89 de part et d'autre de la dent 85 assurent le maintien du roulement 83. La dent 86 est formée de deux parties alésées 90 et 91 qui lorsqu'elles sont assemblées forment une glissière verticale 92 dans laquelle peut coulisser librement le roulement à billes oscillant 84. L'autre extrémité 93 du demi-arbre 44 est reliée au demi-arbre 54, non représenté, par joint homocinétique 52 à double cardan dont une partie seulement est montrée sur la figure 3.

La figure 4 représente, en section de profil, la position des principaux organes intervenant dans le pressage du vitrage feuilleté.

En position réglée et au repos, le rouleau presseur 23 est disposé dans le plan vertical 95 passant par l'axe des galets inférieurs 13. Les galets supérieurs 24 viennent s'appuyer sur le rouleau presseur, légèrement en amont, d'environ 15 mm, du plan vertical 95, alors que le rouleau d'appui 39 s'applique sur le rouleau presseur, dans sa partie supérieure aval. Grâce à cette disposition, le rouleau presseur, ou tout au moins ses deux extrémités ne peuvent s'échapper longitudinalement lors du calandrage.

Le rouleau presseur cylindrique représenté est formé de deux couches de caoutchouc vulcanisé: par exemple une couche externe 96 de 20 millimètres d'épaisseur, de dureté Shore 70, et une couche interne 97 plus molle, par exemple de dureté Shore de 40, qui forme le corps du rouleau. Cette structure lui procure une grande souplesse et lui permet d'agir constamment sur l'élément supérieur à assembler avec le support rigide pour former le vitrage, en absorbant, en tout ou partie, les modifications de courbure transversale de celui-ci.

Pour augmenter cette faculté d'adaptation aux variations de rayons de courbure d'un même vitrage, les galets inférieurs, de même que les galets supérieurs, peuvent être montés sur un système à débattement et à rappel élastique. Ils peuvent également présenter une structure périphérique à deux couches de caoutchouc de duretés différentes. Ainsi leur jante en acier peut être recouverte à sa périphérie d'une couche interne, respectivement 98 et 99, de 20 millimètres d'épaisseur environ, en caoutchouc suffisamment mou, et d'une deuxième couche, externe, respectivement 100 et 101, de 20 millimètres d'épaisseur environ, en caoutchouc plus dur et plus résistant à l'usure. Le rouleau d'appui 39 en acier est également recouvert d'une couche de caoutchouc 94.

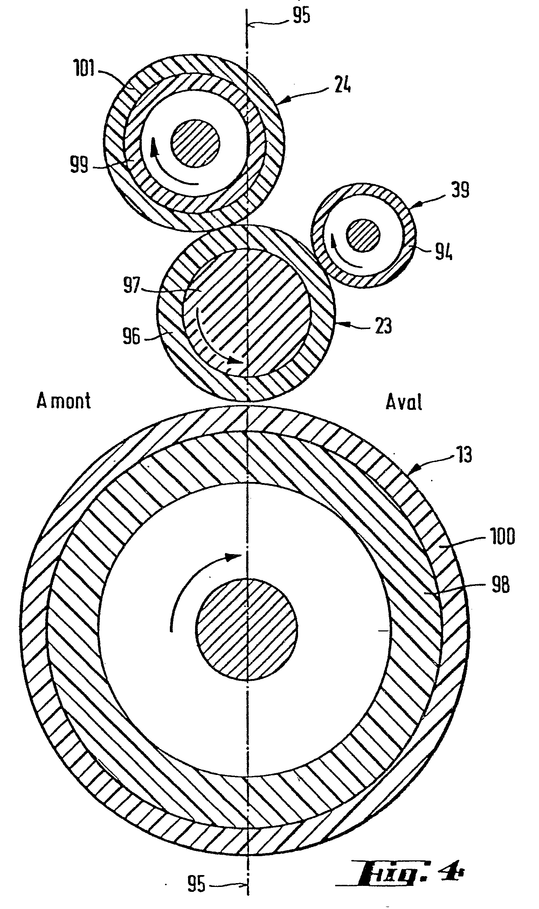

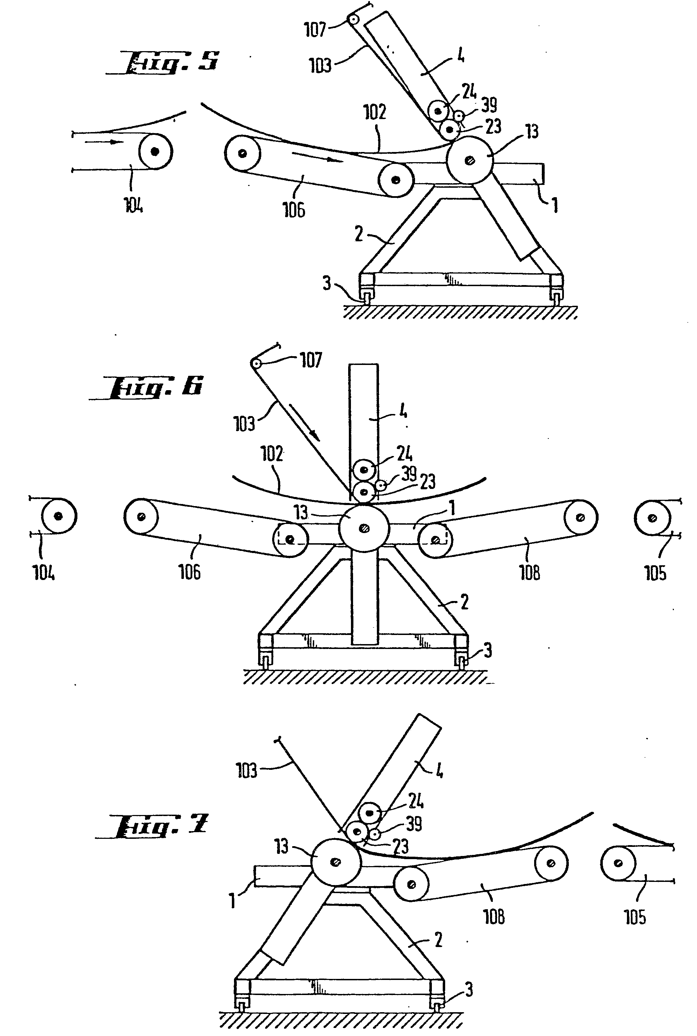

Le fonctionnement du dispositif est maintenant décrit à l'aide des figures 5, 6 et 7 et en relation avec la fabrication par calandrage d'un vitrage de sécurité à double courbure, comprenant un support rigide 102 monolithe ou feuilleté en verre et/ou en matière plastique que l'on recouvre d'une feuille de matière plastique souple 103. On utilise, par exemple, une feuille telle que celle décrite dans le brevet belge 856 398 déjà cité, formée essentiellement d'une couche de polyuréthane thermodurcissable présentant des propriétés d'antilacération et d'autocicatrisation et d'une couche d'un polymère thermoplastique ayant des propriétés d'adhésion avec le support à recouvrir.

Sur les figures 5, 6 et 7 le dispositif est représenté dans une ligne d'assemblage, disposé entre un convoyeur amont 104, à rouleaux ou à courroies, qui amène le support à recouvrir, et un convoyeur aval 105 qui réceptionne et éloigne le support recouvert.

La partie finale 106 du convoyeur amont est inclinée par rapport à l'horizontale de façon à amener le bord du support à recouvrir perpendiculairement au plan commun des galets inférieurs et du rouleau presseur (c'est-à-dire perpendiculairement au plan de pincement) sans qu'il soit nécessaire d'incliner fortement le cadre pivotant qui porte ces organes.

La feuille de matières plastiques qui doit recouvrir le support fait partie d'un ruban de longueur indéfinie. Elle est amenée par le dessus du dispositif tout en étant contamment maintenue tendue par un rouleau supérieur 107 de tension.

A l'aide des tiges filetées on règle la position des galets inférieurs pour donner à l'ensemble la courbure désirée qui est généralement la courbure transversalé moyenne du vitrage. On donne une courbure identique au rouleau presseur en le déformant à l'aide des galets supérieurs dont la position est réglée grâce à leurs tiges filetées. La distance du rouleau presseur aux galets inférieurs étant légèrement inférieure à l'épaisseur du vitrage à fabriquer, ou même nulle, le rouleau presseur étant alors au contact des galets inférieurs, on règle le rouleau d'appui pour qu'il vienne exercer son action sur le rouleau presseur.

On actionne le dispositif moteur. Le rouleau presseur et les galets inférieurs moteurs sont entraînés dans un mouvement de rotation, à la vitesse linéaire d'environ 3 mètres par minute ou plus le cas échéant, cette vitesse pouvant éventuellement varier au cours d'un même assemblage, en fonction de la séquence: approche du vitrage, assemblage proprement dit, etc ... Les galets supérieurs et le rouleau d'appui sont entraînés par le rouleau presseur. Le sens de rotation est celui des flèches représentées sur la figure 4.

Alors que le support à recouvrir 102 arrive sur le convoyeur amont incliné 106, on fait pivoter manuellement ou automatiquement le cadre équilibré 4 qui porte notamment les organes de pressage, pour incliner vers l'amont la partie supérieure du cadre.

Le bord du support à recouvrir se présente perpendiculairement au plan de pincement. Au contact des galets inférieurs moteurs, ce support est entraîné entre ceux-ci et le rouleau presseur qui lui-même entraîne la feuille de matières plastiques et la presse en tous points sur le support. Au fur et à mesure que le support avance entre le rouleau presseur et les galets inférieurs moteurs et fous, ces derniers entraînés en rotation par la face inférieure du support, et que la feuille de matières plastiques recouvre le dernier, le cadre pivote autour des deux demi-axes horizontaux 11 et 12 pour atteindre la position verticale au moment où l'assemblage est à moitié réalisé, puis il s'incline vers le convoyeur aval, sur la partie inclinée 100 duquel le support recouvert de la feuille de matières plastiques est déposé.

Durant l'opération de calandrage, le rouleau presseur exerce sur le vitrage une force suffisante qui peut être sensiblement égale en tous ses points. Cette force peut être très différente selon le vitrage fabriqué et peut varier par exemple de un à plusieurs centaines de newtons par centimètre linéaire.

Bien que le rouleau presseur et les galets inférieurs soient réglés initialement à une courbure transversale moyenne du vitrage, la grande souplesse du rouleau presseur associée, le cas échéant, à celle des amortisseurs sur lesquels peuvent être montés les galets supérieurs et les galets inférieurs permet d'absorber les différences éventuelles de courbure transversale au fur et à mesure du défilement du vitrage.

A la sortie du dispositif, la feuille de matières plastiques est parfaitement appliquée sur le support et aucune bulle n'apparaît entre eux deux.

L'adhésion obtenue entre le support et la feuille peut être suffisante pour les applications ultérieures du vitrage.

Pour un parebrise automobile, on améliore généralement l'adhésion obtenue en soumettant le vitrage à un cycle d'autoclave, par exemple à 120°C sous une pression de 10 bars pendant une heure.

Le cas échéant, pour augmenter l'adhésion au calandrage, on chauffe la feuille avant assemblage, à une température de l'ordre de 60°C, de façon à activer la couche collante. Ce chauffage peut se faire à l'aide d'un dispositif annexe tel que des tubes infrarouges placés face à la feuille. On peut également chauffer le support au préalable.

Lorsque l'assemblage est réalisé, la feuille de matières plastiques est découpée aux contours adéquats du vitrage et ceci par des moyens connus en soi tel qu'une lame chauffante.

Durant l'opération de calandrage proprement dite, le rouleau presseur peut prendre, dans le sens du déplacement du vitrage, une courbure, plus ou moins accentuée en s'engageant plus ou moins sous le rouleau d'appui sous l'effet de la courbure du vitrage.

On fabrique ainsi toutes sortes de vitrages feuilletés de sécurité, de tailles et de courbures très diverses, notamment des parebrise de véhicules à moteurs, et ceci à une cadence élevée. On fabrique par exemple environ deux cents vitrages et plus à l'heure.

Le dispositif peut également être utilisé avec avantage pour la fabrication de lentilles ou autres assemblages d'éléments pour lesquels les courbures des deux faces opposées sont différentes. Il suffit de régler le rouleau presseur à une courbure de la face supérieure du feuilleté à obtenir, et, les moyens inférieurs tels

les galets, inférieurs, à une courbure de la face inférieure du feuilleté.

La grande souplesse du dispositif lui permet le cas échéant d'assembler différents types de vitrages ayant des courbures et des épaisseurs différentes, sand qu'il soit nécessaire de modifier les positions respectives des moyens de pinçage. Il est alors important que les dits moyens de pinçage soient disposés suivant sensiblement la courbure la plus accentuée, de sorte que les extrémités des moyens de pinçage inférieurs, par exemple les galets inférieurs disposés aux extrémités, supportent toujours le vitrage.

Bien que le dispositif selon l'invention permette la fabrication de vitrages feuilletés plans ou à simple courbure, ce dispositif sera surtout utilisé avec evantage pour la fabrication de vitrages feuilletés à double bombage et notamment ceux présentant une couche extérieure de matière plastique, comme décrit par exemple dans les publications de brevets français 2.187.719 et 2.398.606.

## Revendications

1. Dispositif pour la fabrication de vitrages feuilletés, notamment de vitrages d'automobile ou de bâtiment, caractérisé en ce qu'il comprend en combinaison:

— des moyens inférieurs (13) de support du vitrage à assembler disposés sensiblement suivant le profil de la face inférieure du vitrage à assembler transversalement à sa direction de déplacement,

— des moyens de pressage du vitrage à assembler sur les moyens inférieurs de support, moyens constitués d'un rouleau presseur cylindrique souple (23) disposé au-dessus des moyens inférieurs de support, et qui s'étend, transversalement à la direction de déplacement du vitrage à assembler, sur une longueur au moins égale à la longueur dudit vitrage,

— des moyens supérieurs (24) appuyant sur le rouleau presseur pour le cintrer en lui donnant toute courbure désirée correspondant sensiblement au profil de la face supérieure de vitrage à assembler transversalement à sa direction de déplacement et qui maintiennent le rouleau presseur dans sa position de travail au contact de la face supérieure dudit vitrage,

— des moyens assurant l'entraînement en rotation du rouleau presseur et/ou d'au moins une partie des moyens inférieurs de support.

2. Dispositif selon la revendication 1, caractérisé en ce que les moyens supérieurs appuient sur le rouleau presseur pour lui donner une courbure sensiblement identique à celle des moyens inférieurs.

3. Dispositif selon une des revendications 1 ou 2, caractérisé en ce que les moyens inférieurs sont formés d'une succession de galets (13) disposés les uns à côté des autres suivant la courbure désirée.

4. Dispositif selon une des revendications 1 à 3, caractérisé en ce que les moyens supérieurs s'appuyant sur le rouleau presseur souple pour le courber sont formés d'au moins une succession de galets (24) disposés les uns à côté des autres.

5. Dispositif selon une des revendications 3 à 4, caractérisé en ce que les moyens supérieurs s'appuyant sur le rouleau presseur sont montée décalés en amont par rapport au plan passant par l'axe des galets inférieurs et l'axe du rouleau presseur, alors que des moyens supplémentaires (39) viennent bloquer le rouleau presseur en aval.

6. Dispositif selon la revendication 5, caractérisé en ce que les moyens venant bloquer le rouleau presseur en aval comprennent un cylindre (39) s'étendant sur une longueur au moins égale à celle du cylindre presseur.

7. Dispositif slon une des revendications 1 à 6, caractérisé en ce que le rouleau souple presseur est en caoutchouc vulcanisé.

8. Dispositif selon une des revendications 1 à 7, caractérisé en ce que le diamètre du rouleau presseur est inférieur à environ 20 centimètres et de préférence de l'ordre de 10 centimètres.

9. Dispositif selon une des revendications 1 à 8, caractérisé en ce que le rouleau souple presseur est formé d'au moins deux couches (96, 97) en caoutchouc vulcanisé de duretés différentes.

10. Dispositif selon une des revendications 1 à 9, caractérisé en ce que le rouleau souple presseur est formé de trois couches en caoutchouc vulcanisé: une couche externe dure, une couche intermédiaire molle, une couche interne dure.

11. Dispositif selon une des revendications 1 à 10, caractérisé en ce que le rouleau souple presseur est maintenu à ses extrémités par deux demi-arbres (44, 45) montés dans des doubles roulements à billes oscillants et coulissants.

12. Dispositif selon une des revendications 2 à 11, caractérisé en ce que tous les galets inférieurs ont le même diamètre.

13. Dispositif selon une des revendications 2 à 12, caractérisé en ce qu'une partie (17) des galets inférieurs est constituée de galets moteurs.

14. Dispositif selon une des revendications 2 à 13, caractérisé en ce que les galets présentent au moins une couche externe souple notamment en caoutchouc vulcanisé.

15. Dispositif selon la revendication 14, caractérisé en ce que les galets inférieurs présentent une couche edxterne dure en caoutchouc vulcanisé et une couche interne molle.

16. Dispositif selon une des revendications 3 à 15, caractérisé en ce que les galets inférieurs sont montés sur un système à débattement et à rappel élastique tel un ressort ou un vérin.

17. Dispositif selon une des revendications 4 à 16, caractérisé en ce que les galets supérieurs présentent une couche souple notamment en caoutchouc vulcanisé.

18. Dispositif selon la revendication 17, caractérisé en ce que les galets supérieurs présentent une couche externe dure en caoutchouc vulcanisé et une couche interne molle.

19. Dispositif selon une des revendications 4 à 18, caractérisé en ce que les galets supérieurs sont montés sur un système à débattement et à rappel élastique tel un ressort ou un vérin.

20. Dispositif selon une des revendications 4 à 19, caractérisé en ce que les galets supérieurs ont des largeurs plus grandes au centre de la courbure qu'à sus extrémités.

21. Dispositif selon une des revendications 4 à 20, caractérisé en ce que les galets supérieurs ont des bords arrondis.

22. Dispositif selon une des revendications 1 à 17, caractérisé en ce que le rouleau moteur est entraîné par un système à doubles cardans.

23. Dispositif selon une des revendications 1 à 22, caractérisé en ce que les moyens inférieurs de support, les moyens de pressage du vitrage et les moyens supérieurs appuyant sur le rouleau presseur sont montés sur un cadre mobile (4) pivotant autour d'un axe horizontal.

24. Dispositif selon une des revendications 1 à 23, caractérisé en ce qu'il comprend des moyens permettant au rouleau presseur et aux moyens supérieurs appuyant sur le rouleau presseur de se séparer des moyens inférieurs de support.

25. Dispositif selon la revendication 24, caractérisé en ce que les moyens permettant au rouleau presseur et aux moyens supérieurs appuyant sur le rouleau presseur de se séparer des moyens inférieurs de support sont des vérins, notamment des vérins hydropneumatiques.

26. Dispositif selon une des revendications 13 à 25, caractérisé en ce que les galets inférieurs moteurs sont montés sur roues libres.

27. Application du dispositif selon une des revendications 1 à 26 à la fabrication d'un vitrage feuilleté comprenant un support monolithe ou feuilleté recouvert d'une feuille de matière plastique souple.

28. Application du dispositif selon la revendication 27, caractérisée en ce que la feuille de matière plastique est formée essentiellement d'une couche de polyuréthane thermodurcissable ayant des propriétés d'anti-lacération et d'autocicatrisation et d'une couche thermoplastique ayant des propriétés d'adhésion avec le support à recouvrir.

**Patentansprüche**

1. Vorrichtung zur Herstellung von Verbundglasscheiben, insbesondere Automobil- oder Bauglasscheiben, dadurch gekennzeichnet, daß sie in Kombination enthält:
— untere Einrichtungen (13) zur Abstützung der zu verbindenden Glasscheiben, die im wesentlichen entsprechend dem Profil der unteren Oberfläche der zu verbindenden Glasscheiben quer zu deren Vorschubrichtung an-

0 015 209

geordnet sind,
— Einrichtungen zum Pressen der zu verbindenden Glasscheiben auf den unteren Abstützeinrichtungen, bestehend aus einer biegsamen, zylindrischen, über den unteren Abstützeinrichtungen angeordneten und sich quer zur Vorschubrichtung der zu verbindenden Glasscheiben erstreckende Preßwalze (23), deren Erstreckung wenigstens gleich der Länge der Glasscheiben ist,
— obere auf die Preßwalze drückende Einrichtungen (24) zum Durchbiegen derselben, die ihr die ganze gewünschte Krümmung entsprechend dem Profil der oberen Fläche der zu verbindenden Glasscheiben quer zur Vorschubrichtung geben und die Preßwalze in ihrer Arbeitsstellung mit der oberen Fläche der Glasscheiben in Kontakt halten,
— Mittel zur Sicherstellung des Drehantriebs der Preßwalze und/oder wenigstens eines Teiles der unteren Abstützeinrichtung.

2. Vorrichtung nach Anspruch 1, dadurch gekennzeichnet, daß die oberen Einrichtungen so auf die Preßwalze drücken, daß sie ihr eine Krümmung verleihen, die im wesentlichen identisch mit der der unteren Einrichtungen ist.

3. Vorrichtung nach einem der Ansprüche 1 oder 2, dadurch gekennzeichnet, daß die unteren Einrichtungen aus einer Aufeinanderfolge von Rollen (13) bestehen, die entsprechend der gewünschten Krümmung Seite an Seite nebeneinander angeordnet sind.

4. Vorrichtung nach einem der Ansprüche 1 bis 3, dadurch gekennzeichnet, daß sich die oberen sich auf die biegsame Preßwalze legenden und sie durchzubiegenden Einrichtungen aus wenigstens einer Aufeinanderfolge von Seite an Seite nebeneinander abgeordneten Rollen (24) bestehen.

5. Vorrichtung nach einem oder mehreren der Ansprüche 3 bis 4, dadurch gekennzeichnet, daß die sich auf die Preßwalze legenden oberen Einrichtungen bezüglich einer durch die Achse der unteren Rollen und die Achse der Preßwalze verlaufenden Ebene stromaufwärts versetzt angeordnet sind, während zusätzliche Einrichtungen (39) die Preßwalze stromabwärts blockieren.

6. Vorrichtung nach Anspruch 5, dadurch gekennzeichnet, daß die Einrichtungen zum Blockieren der Preßwalze stromabwärts aus einem Zylinder (39) bestehen, der sich über eine Länge wenigstens gleich derjenigen der zylindrischen Preßwalze erstreckt.

7. Vorrichtung nach einem der Ansprüche 1 bis 6, dadurch gekennzeichnet, daß die biegsame Preßwalze aus vulkanisiertem Kautschuk besteht.

8. Vorrichtung nach einem der Ansprüche 1 bis 7, dadurch gekennzeichnet, daß der Durchmesser der Preßwalze unter ca. 20 cm und vorzugsweise in der Größenordnung von 10 cm liegt.

9. Vorrichtung nach einem der Ansprüche 1 bis 8, dadurch gekennzeichnet, daß die biegsame Preßwalze aus wenigstens zwei Schichten (96, 97) aus vulkanisiertem Kautschuk mit unterschiedlicher Härte besteht.

10. Vorrichtung nach einem der Ansprüche 1 bis 9, dadurch gekennzeichnet, daß die biegsame Preßwalze aus drei Schichten aus Vulkanisiertem Kautschuk besteht: einer äußeren harten Schicht, einer weichen Zwischenschicht und einer harten Innenschicht.

11. Vorrichtung nach einem der Ansprüche 1 bis 10, dadurch gekennzeichnet, daß die biegsame Preßwalze an ihren Enden durch zwei Halbwellen (44, 45) gehalten ist, die in gleitenden und schwingenden Doppelkugellagern montiert sind.

12. Vorrichtung nach einem der Ansprüche 2 bis 11, dadurch gekennzeichnet, daß alle unteren Rollen den gleichen Durchmesser aufweisen.

13. Vorrichtung nach einem der Ansprüche 2 bis 12, dadurch gekennzeichnet, daß ein Teil (17) der unteren Rollen angetrieben ist.

14. Vorrichtung nach einem der Ansprüche 2 bis 13, dadurch gekennzeichnet, daß die Rollen wenigstens eine äußere weiche Schicht vorzugsweise aus vulkanisiertem Kautschuk aufweisen.

15. Vorrichtung nach Anspruch 14, dadurch gekennzeichnet, daß die unteren Rollen eine äußere harte Schicht aus vulkanisiertem Kautschuk und eine innere weiche Schicht aufweisen.

16. Vorrichtung nach einem der Ansprüche 3 bis 15, dadurch gekennzeichnet, daß die unteren Rollen auf einem nachgebenden und elastischen Rückholsystem, wie einer Feder oder einem Zylinder montiert sind.

17. Vorrichtung nach einem der Ansprüche 4 bis 16, dadurch gekennzeichnet, daß die oberen Rollen eine weiche Schicht insbesondere aus vulkanisiertem Kautschuk aufweisen.

18. Vorrichtung nach Anspruch 17, dadurch gekennzeichnet, daß die oberen Rollen eine äußere harte Schicht aus vulkanisiertem Kautschuk und eine weiche Innenschicht aufweisen.

19. Vorrichtung nach einem der Ansprüche 4 bis 18, dadurch gekennzeichnet, daß die oberen Rollen auf einem nachgebendem und elastischem Rückholsystem, wie einer Feder oder einem Zylinder montiert sind.

20. Vorrichtung nach einem der Ansprüche 4 bis 19, dadurch gekennzeichnet, daß die oberen Rollen in der Mitte der Krümmung eine größere Breite aufweisen als an den Enden.

21. Vorrichtung nach einem der Ansprüche 4 bis 20, dadurch gekennzeichnet, daß die oberen Rollen abgerundete Ränder aufweisen.

22. Vorrichtung nach einem der Ansprüche 1 bis 17, dadurch gekennzeichnet, daß die angetriebene Walze durch eine Doppelkardansystem angetrieben ist.

23. Vorrichtung nach einem der Ansprüche 1 bis 22, dadurch gekennzeichnet, daß die unteren Abstützeinrichtungen, die Glaspreßeinrichtungen und die oberen, auf die Preßwalze

9

wirkenden Einrichtungen auf einem um eine horizontale Achse schwenkbaren beweglichen Rahmen (4) montiert sind.

24. Vorrichtung nach einem der Ansprüche 1 bis 23, dadurch gekennzeichnet, daß sie Mittel aufweist, die es der Preßwalze und den oberen auf die Preßwalze wirkenden Einrichtungen ermöglichen, sich von der unteren Abstützeinrichtungen zu trennen.

25. Vorrichtung nach Anspruch 24, dadurch gekennzeichnet, daß die Einrichtungen, mit denen die Preßwalze und die oberen, auf die Preßwalze wirkenden Einrichtungen von den unteren Abstützwalzen trennbar sind, aus Zylindern, vorzugsweise hydropneumatischen Zylindern besteht.

26. Vorrichtung nach einem der Ansprüche 13 bis 25, dadurch gekennzeichnet, daß die unteren angetriebenen Rollen auf freien Rädern montiert sind.

27. Verwendung der Vorrichtung nach einem der Ansprüche 1 bis 26, für die Herstellung einer Mehrschichtenglasscheibe aus einer monolithischen Glasscheibe oder einer Verbundglasscheibe, die mit einer weichen Kunststoff-Folie abgedeckt ist.

28. Anwendung der Vorrichtung nach Anspruch 27, dadurch gekennzeichnet, daß die Kunststoff-Folie im wesentlichen aus einer Schicht aus wärmehärtbarem, gegen Verletzungen schützendem und selbstheilendem Polyurethan und einer thermoplastischen, mit der zu bedeckenden Trägerscheibe verklebbaren Schicht besteht.

**Claims**

1. Device for making laminated panes, for example panes for automobiles or buildings, charaterised in that it comprises in combination:

— lower means (13) for supporting the pane to be assembled arranged substantially along the profile of the lower surface of the pane to be assembled transversely to its direction of displacement,

— means for pressing the pane to be assembled onto the lower support means, means constituted by a flexible cylindrical press roller (23) arranged above the lower suport means and which extends transversely to the direction of displacement of the pane to be assembled, over a length at least equal to the length of said pane,

— upper means (24) making contact with the press roller for curving it thus giving it any desired curvature corresponding substantially to the profile of the upper surface of the pane to be assembled transversely to its direction of displacement and which hold the press roller in its working position in contact with the upper surface of said pane,

— and means ensuring driving in rotation of the press roller and/or at least a part of the lower support means.

2. Device according to claim 1, characterised in that the upper means make contact with the press roller to give it a curvature substantially identical to that of the lower means.

3. Device according to one of claims 1 and 2, characterised in that the lower means are formed of a succession of wheels (13) arranged one beside another along the desired curvature.

4. Device according to one of claims 1 to 3, characterised in that the upper means in contact with the flexible press roller to curve it are formed of at least one succession of wheels (24) arranged one beside another.

5. Device according to one of claims 3 to 4, characterised in that the upper means in contact with the press roller are mounted displaced upstream with respect to the plane passing through the axis of the lower wheels and the axis of the press roller, whereas supplementary means (39) block the press roller downstream.

6. Device according to claim 5, characterised in that the means which block the press roller downstream comprise a cylinder (39) extending over a length at least equal to that of the press cylinder.

7. Device according to one of claims 1 to 6, characterised in that the flexible press roller is of vulcanised rubber.

8. Device according to one of claims 1 to 7, characterised in that the diameter of the press roller is less than about 20 centimetres and preferably of the order of 10 centimetres.

9. Device according to one of claims 1 to 8, characterised in that the flexible press roller is formed of at least two layers (96, 97) of vulcanised rubber of different hardnesses.

10. Device according to one of claims 1 to 9, characterised in that the flexible press roller is formed of three layers of vulcanised rubber: a hard external layer, a soft intermediate layer and a hard internal layer.

11. Device according to one of claims 1 to 10, characterised in that the flexible press roller is held at its ends by two half-shafts (44, 45) mounted in double ball-bearings capable of oscillating and sliding.

12. Device according to one of claims 2 to 11, characterised in that all the lower wheels have the same diameter.

13. Device according to one of claims 2 to 12, characterised in that a part (17) of the lower wheels are driven.

14. Device according to one of claims 2 to 13, characterised in that the wheels have at least one external flexible layer, notably of vulcanised rubber.

15. Device according to claim 14, characterised in that the lower wheels have a hard external layer of vulcanised rubber and a soft internal layer.

16. Device according to one of claims 3 to 14, characterised in that the lower wheels are mounted on a deflection and elastic return system such as a spring or an actuator.

17. Device according to one of claims 4 to 16, characterised in that the upper wheels have a flexible layer for example of vulcanised rubber.

18. Device according to claim 17, characterised in that the upper wheels have a hard external layer of vulcanised rubber and a soft internal layer.

19. Device according to one of claims 4 to 18, characterised in that the upper wheels are mounted on a deflection and elastic return system, such as a spring or actuator.

20. Device according to one of claims 4 to 19, characterised in that the upper wheels have widths which are greater at the centre of the curvature than at their ends.

21. Device according to one of claims 4 to 20, characterised in that the upper wheels have rounded edges.

22. Device according to one of claims 1 to 17, characterised in that the motor roller is driven by a double cardan joint system.

23. Device according to one of claims 1 to 22, characterised in that the lower support means, means for pressing the pane and upper means making contact with the press roller are mounted on a movable frame (4) pivoting about a horizontal axis.

24. Device according to one of claims 1 to 23, characterised in that it comprises means allowing a press roller and upper means in contact with the press roller to be separated from the lower support means.

25. Device according to claim 24, characterised in that the means allowing the press roller and upper means in contact with the press roller to separate from the lower support means are actuators, such as hydropneumatic actuators.

26. Device according to one of claims 13 to 25, characterised in that the lower motor wheels are mounted on free wheels.

27. Application of the device according to one of claims 1 to 26 to manufacture of a laminated pane comprising a monolithic or laminated support covered with a layer of flexible plastics material.

28. Application of the device according to claim 27, characterised in that the sheet of plastics material is formed essentially of a layer of thermohardening polyurethane having anti-laceration and self-healing properties and a thermoplastics layer having properties of adhesion with the support to be covered.

**Fig. 1**

*Fig: 2*

**Fig. 3**

Amont

Aval

**Fig: 4**

**Fig. 5**

**Fig. 6**

**Fig. 7**